Europäisches Patentamt

European Patent Office

Office européen des brevets

(11) Veröffentlichungsnummer: **0 407 729 A2**

# EUROPÄISCHE PATENTANMELDUNG

(21) Anmeldenummer: 90110520.5

(22) Anmeldetag: 02.06.90

(51) Int. Cl.⁵: **B29C 39/02**, B29C 39/38, //B29K61:04

(30) Priorität: 10.07.89 DE 3922625

(43) Veröffentlichungstag der Anmeldung:
16.01.91 Patentblatt 91/03

(84) Benannte Vertragsstaaten:
AT BE CH DE ES FR GB IT LI NL

(71) Anmelder: MESSER GRIESHEIM GMBH
Hanauer Landstrasse 330
D-6000 Frankfurt/Main 1(DE)

(72) Erfinder: Grohmann, Paul
Erlaufstrasse 23
A-2344 Maria-Enzersdorf(AT)

(54) Verfahren zum Vermeiden von Geruchsbelästigungen bei der Herstellung von Phenolharzen.

(57) Phenolharze werden dikontinuierlich in Reaktoren hergestellt und in Pfannen gegossen, in welchen sie an der Luft erstarren. Zwecks Vermeidung der hiermit verbundenen Geruchsbelästigung wird die Oberfläche des flüssigen Phenolharzes unmittelbar nach dem Abgießen in die Pfannen mit einem kryogenen Medium, vorzugsweise flüssigem Stickstoff, solange beaufschlagt, bis sich eine dünne Schicht erstarrten Phenolharzes gebildet hat. Diese dient als Sperre für die entstehenden geruchsintensiven Gase und Dämpfe.

EP 0 407 729 A2

## VERFAHREN ZUM VERMEIDEN VON GERUCHSBELÄSTIGUNGEN BEI DER HERSTELLUNG VON PHENOL-HARZEN

Die Erfindung betrifft ein Verfahren zum Vermeiden von Geruchsbelästigungen bei der Herstellung von Phenolharzen, die diskontinuierlich in einem Reaktor hergestellt werden.

Nach ihrer Fertigstellung werden die Phenolharze in große Pfannen gegossen und erstarren an der Luft. Die Schichtdicke in den Pfannen beträgt etwa 5 cm. Um Phenolharze mit bestimmten physikalischen Eigenschaften herzustellen, ist es auch bekannt, die Abkühlung sehr schnell mit Wasser oder gemäß der DE-OS 36 30 928 mit einem tiefsiedenden verflüssigten Gas vorzunehmen. Die Kühlung mit Wasser kann jedoch nur bei solchen Phenolharzen erfolgen, die mit Wasser in Berührung kommen dürfen.

Bei der üblichen Abkühlung an Luft entstehen geruchsintensive Gase und Dämpfe. Diese müssen abgesaugt und entsorgt werden. Diese Entgasung kann so stark sein, daß die für die schnelle Abkühlung erwünschte Gebläseluftkühlung aufgrund des großen Abgasvolumens nicht verwendet werden kann.

Der Erfindung liegt daher die Aufgabe zugrunde, ein Verfahren zur Herstellung von Phenolharzen zu schaffen, bei dem die Geruchsbelästigungen beim Erstarren der Harze vermieden werden.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Durch die erfindungsgemäße Beaufschlagung mit einem kryogenen Medium wird der Oberfläche des flüssigen Phenolharzes soviel Wärme entzogen, daß ein dünner Film erstarrt. Dieser Film wirkt als Sperrschicht gegen aus dem flüssigen Harz austretende Gase und Dämpfe. Hierdurch wird die Geruchsbelästigung nahezu vollständig vermieden. Die Gebläseluftkühlung kann sehr frühzeitig eingeschaltet werden.

Als kryogenes Medium eignet sich besonders flüssiger Stickstoff, jedoch können auch andere tiefsiedende verflüssigte Gase oder Kohlendioxidschnee verwendet werden. Da die Phenolharze eine geringe Wärmeleitung besitzen, wird die erstarrte Oberflächenschicht nicht sofort durch das darunter liegende flüssige Harz wieder aufgeschmolzen. Falls diese Gefahr besteht, kann der Kühlvorgang gegebenenfalls wiederholt werden.

Da mit dem kryogenen Medium nur eine dünne Schicht erstarrten Phenolharzes an der Oberfläche gebildet werden muß, ist der Kühlmittelverbrauch für das erfindungsgemäße Verfahren außerordentlich gering. Es genügt daher völlig, wenn bei Verwendung eines flüssigen Kühlmittels dieses auf die Oberfläche des flüssigen Phenolharzes aufgesprüht wird. In Sonderfällen kann es bereits ausreichen, das kryogene Kühlmittel in gasförmigem Zustand auf die Oberfläche des flüssigen Phenolharzes aufzublasen.

Das erfindungsgemäße Verfahren hat darüber hinaus den Vorteil, daß nach Bildung des erstarrten Oberflächenfilms die preiswerte Wasserkühlung auch bei solchen Phenolharzen angewendet werden kann, die in flüssigem Zustand nicht mit Wasser in Berührung kommen dürfen.

### Ansprüche

1. Verfahren zum Vermeiden von Geruchsbelästigungen bei der Herstellung von Phenolharzen, die diskontinuierlich in einem Reaktor hergestellt, aus diesem in Pfannen gegossen und dort durch Luftkühlung zur Erstarrung gebracht werden,
dadurch gekennzeichnet,
daß unmittelbar nach dem Abgießen in die Pfannen die Oberfläche des flüssigen Phenolharzes mit einem kryogenen Medium solange beaufschlagt wird, bis sich eine dünne Schicht erstarrten Phenolharzes gebildet hat.

2. Verfahren nach Anspruch 1,
dadurch gekennzeichnet,
daß auf das Phenolharz flüssiger Stickstoff aufgesprüht wird.

3. Verfahren nach Anspruch 1 oder 2,
dadurch gekennzeichnet,
daß die Beaufschlagung mit den kryogenen Medium mehrfach erfolgt, bis die erstarrte dünne Schicht durch das darunter befindliche flüssige Phenolharz nicht mehr aufgeschmolzen wird.